(19) Europäisches Patentamt

European Patent Office

Office européen des brevets

(11) **EP 1 224 092 B1**

(12) **FASCICULE DE BREVET EUROPEEN**

(45) Date de publication et mention
de la délivrance du brevet:
**02.08.2006 Bulletin 2006/31**

(51) Int Cl.:
***B60L 11/12*** *(2006.01)*     ***B60L 15/20*** *(2006.01)*

(21) Numéro de dépôt: **00966228.9**

(22) Date de dépôt: **29.09.2000**

(86) Numéro de dépôt international:
**PCT/FR2000/002697**

(87) Numéro de publication internationale:
**WO 2001/025049 (12.04.2001 Gazette 2001/15)**

(54) **PROCEDE DE COMMANDE D'UN VEHICULE HYBRIDE**

REGELUNGSVERFAHREN FÜR EIN HYBRIDFAHRZEUG

CONTROL METHOD FOR HYBRID VEHICLE

(84) Etats contractants désignés:
**BE DE ES GB IT**

(30) Priorité: **01.10.1999 FR 9912302**

(43) Date de publication de la demande:
**24.07.2002 Bulletin 2002/30**

(73) Titulaire: **Renault s.a.s.**
**92100 Boulogne Billancourt (FR)**

(72) Inventeurs:
• **CHAUVELIER, Eric**
**F-78320 Le Mesnil Saint Denis (FR)**
• **COUTIER, Thierry**
**F-92100 Boulogne Billancourt (FR)**

(56) Documents cités:
**EP-A- 0 781 680**      **EP-A- 0 830 968**
**DE-A- 19 745 849**      **FR-A- 2 679 839**
**FR-A- 2 774 040**      **US-A- 5 959 420**

EP 1 224 092 B1

**Description**

L'invention concerne un procédé de commande d'un véhicule hybride à transmission électrique, de type série/parallèle, comprenant un moteur thermique et deux moteurs électriques qui entraînent les roues par un double train épicycloïdal plus particulièrement.

Un véhicule automobile de type hybride parallèle/série comprend au moins deux sources d'énergie , soit le carburant primaire - essence ou gasoil - qui alimente le moteur thermique et l'électricité qui alimente les deux moteurs électriques. Le dispositif de transmission mécanique de la puissance aux roues permet d'offrir la fonction série, c'est à dire que seuls les moteurs électriques fournissent la puissance aux roues, ainsi que la fonction parallèle pour laquelle les puissances mécaniques du moteur thermique et des moteurs électriques sont sommées au niveau des roues du véhicule. Dans le cas d'un véhicule hybride double différentiel, la transmission mécanique de puissance est réalisée par un double train épicycloïdal, c'est à dire constitué de deux trains épicycloïdaux reliés par une ou plusieurs liaisons.

L'architecture d'un véhicule hybride double différentiel est complexe et nécessite un système de commande électronique qui tient compte des rapports et des interactions entre les différents composants pour exploiter toutes les fonctionnalités et éviter de mettre en défaut le système.

Actuellement, il existe différentes architectures hybrides simples différentielles, mettant en jeu un train épicycloïdal, deux machines électriques et un moteur thermique. Le brevet français N° 2 679 839 déposé au nom de JEUMONT SCHNEIDER propose un système dont l'arbre de sortie est lié au porte-satellite du train épicycloïdal, la couronne à un premier moteur électrique et le planétaire au moteur thermique. Entre le train épicycloïdal et le moteur thermique est monté le second moteur électrique qui fonctionne en alternateur. La commande de ce système est destinée à contrôler la vitesse de l'arbre de sortie. Pour cela, la commande fixe la valeur du régime du moteur thermique et fait varier la vitesse de l'arbre de sortie par le moteur électrique placé sur la couronne du train épicycloïdal. Le régime du moteur thermique est fixe tant que la vitesse du véhicule n'implique pas un surrégime du moteur électrique placé sous la couronne, sinon lorsque celui-ci atteint sa vitesse butée, le régime du moteur thermique est alors changé. La commande ne permet qu'un asservissement en vitesse sans régulation possible du couple de sortie.

Une solution aux problèmes posés par les dispositifs existants à un train épicycloïdal est proposé dans la demande de brevet français N° 2 774 040, déposée au nom de RENAULT, qui concerne un groupe motopropulseur hybride comportant un double train épicycloïdal. Cette architecture à double différentiel présente des différences notoires avec l'architecture à simple différentiel. En particulier, si sur le simple différentiel, le moteur électrique $ME_2$ monté sur la couronne transmet directement son couple aux roues, sans rapport de démultiplication, ce qui entraîne un dimensionnement élevé du moteur, dans le double différentiel, ce moteur $ME_2$ est découplé des roues par l'intermédiaire du second train épicycloïdal. L'autre liaison nécessaire entre les deux trains est celle qui relie les planétaires : le moteur électrique $ME_1$ qui est solidaire du planétaire du train épicycloïdal dans le cas du simple différentiel, est solidaire des deux trains épicycloïdaux par l'intermédiaire de leurs planétaires rigidement liés dans le cas du double différentiel. De plus, la commande d'un système à double différentiel ne découle pas de celle d'un simple différentiel car il existe des interactions plus complexes entre les composants. Dans le cas d'un simple différentiel, le régime du moteur thermique ne dépend que de ce moteur et du moteur électrique $ME_1$, monté sur le planétaire du train qui sert à asservir le régime pendant que le second moteur électrique $ME_2$ complète le couple fourni par la couronne pour satisfaire le couple à la roue demandé par le conducteur. Il est possible de déterminer séquentiellement les couples des deux moteurs électriques qui agissent séparément sur les deux consignes à atteindre. Par contre, dans le cas d'un double différentiel, le régime du moteur thermique dépend des couples des trois moteurs et il devient impossible de contrôler le régime du moteur thermique et le couple à la roue du double différentiel par un calcul séquentiel des couples des deux moteurs électriques.

Il est également nécessaire d'établir les bornes maximales et minimales de l'accélération du moteur thermique et du couple à la roue réalisables en fonction des limites des composants et de l'état instantané du système, ce que ne prévoit pas la commande d'un simple différentiel.

Or cette architecture hybride à double différentiel a pour avantage, entre autres, d'apporter un rapport de réduction supplémentaire entre le moteur électrique placé en parallèle et les roues, donc de transmettre à la roue un couple supérieur. Sa commande, plus complexe que celle d'un système simple différentiel, réalise les objectifs suivants:

- satisfaire la demande du conducteur, que ce soit en couple, en accélération, en puissance ou en vitesse des roues;
- contrôler les états internes du système, en particulier les transmissions, par exemple les vitesses des trois moteurs ;
- optimiser la consommation en carburant et les émissions de polluants ;
- gérer les limites composants, telles que les couples, vitesses, puissances minimales et maximales, tension, intensité, température des moteurs électriques et thermique, puissance minimale et maximale de charge et de décharge de la batterie.

Pour cela, l'invention concerne un procédé de commande d'un véhicule hybride à transmission électrique de type série/parallèle, comprenant d'une part un moteur thermique et deux moteurs électriques alimentés par une batterie et qui entraînent les roues d'un véhicule par un double train épicycloïdal, et d'autre part, un calculateur électronique de commande qui est relié à chacun des trois moteurs par leurs circuits de commande respectifs et à la batterie par son circuit gestionnaire et qui les commande en fonction de l'enfoncement de la pédale d'accélérateur par le conducteur, caractérisé en ce qu'il calcule les consignes de couples $T_{ME1}$ du premier moteur électrique $ME_1$ et $T_{ME2}$ du deuxième moteur électrique $ME_2$ en fonction des consignes finales de trois grandeurs, l'accélération $(dN_{MT}/dt)_f$ et le couple $(T_{MT})_f$ du moteur thermique et le couple à la roue $(T_{roue})_f$, définies entre des bornes minimale et maximale calculées pour respecter les limites des moteurs et de la batterie en puissance, en couple, en vitesse minimale et maximale.

Les caractéristiques et avantages de l'invention apparaîtront à la lecture de la description d'un exemple de mise en oeuvre du procédé de commande, illustrée par les figures suivantes qui sont :

- la figure 1 : un schéma de principe d'un dispositif de transmission dans un véhicule hybride série/parallèle à double train épicycloïdal ;
- la figure 2 : un schéma électronique représentatif d'un exemple de procédé de commande selon l'invention.

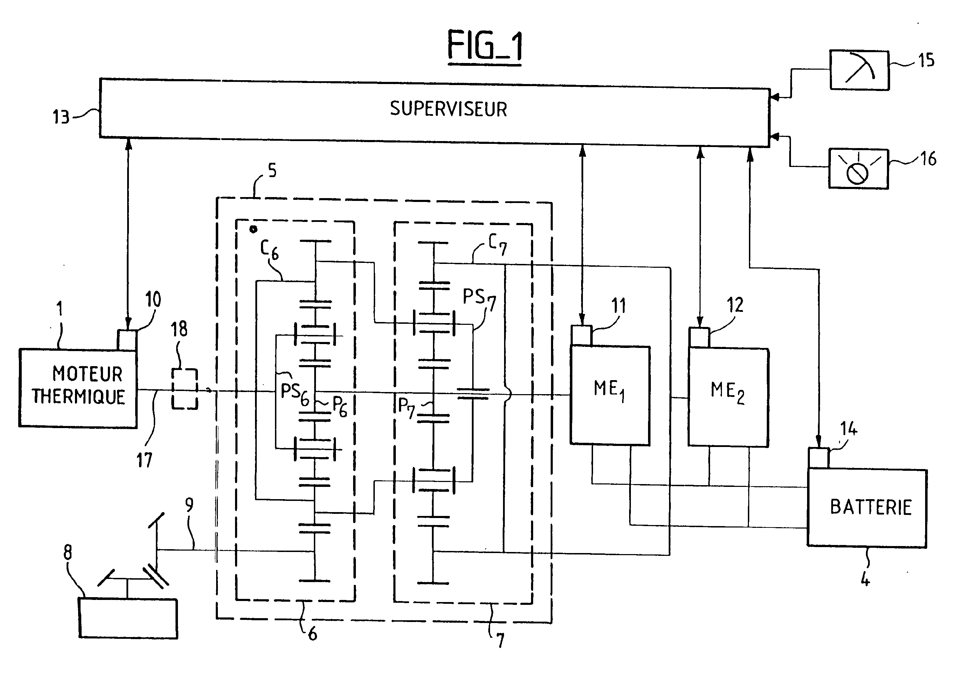

Selon la figure 1, l'architecture du dispositif de transmission mécanique de la puissance aux roues, dans un véhicule hybride de type série/parallèle, comprend un moteur thermique 1 à combustion interne alimenté par un réservoir de carburant, deux moteurs électriques $ME_1$ et $ME_2$ reliés à une batterie 4 ou accumulateur et un double train épicycloïdal 5.

Le moteur thermique 1 est lié au porte-satellite $PS_6$ du premier train 6. Un premier moteur électrique $ME_1$ est lié au planétaire $P_6$ du premier train épicycloïdal 6 d'une part, et au planétaire $P_7$ du second train 7 d'autre part.

Le second moteur électrique $ME_2$ est lié à la couronne $C_7$ du second train 7, et le porte-satellite $PS_7$ du second train 7 est lié à la couronne $C_6$ du premier train 6, qui entraîne les roues 8 par l'intermédiaire de l'arbre de sortie 9.

Les moteurs électriques $ME_1$ et $ME_2$ et leur circuit électronique de puissance associé sont équipés chacun d'un circuit électronique de commande 11 et 12 respectivement, leur permettant de fonctionner dans les quatre quadrants en commande de couple, courant et vitesse. Le moteur thermique 1 est associé à un circuit 10 de commande en couple, ou en angle d'ouverture du papillon par exemple.

Un calculateur électronique de commande 13, de type superviseur, reçoit les informations des différents organes du véhicule, comme le moteur thermique 1, et les deux moteurs électriques $ME_1$ et $ME_2$ par l'intermédiaire de leurs circuits de commande respectifs, et du circuit gestionnaire 14 de la batterie 4. De plus, il tient compte de la demande du conducteur définie par l'enfoncement de la pédale d'accélérateur 15 et par le sélecteur manuel 16 de mode thermique, hybride ou électrique. La position de la pédale traduit une demande de couple à appliquer sur les roues pour satisfaire la demande de vitesse exprimée par le conducteur.

Selon une variante de réalisation, l'arbre 17 du moteur thermique peut être relié à une roue libre 18, permettant, en mode tout électrique, d'utiliser les deux moteurs électriques afin de satisfaire le couple demandé par le conducteur, tout en optimisant le rendement de la chaîne de traction. Il n'est plus nécessaire alors d'asservir le moteur thermique à un régime nul, et on bénéficie de plus, du couple réactif de la roue libre.

L'objet de l'invention est un procédé de commande d'un véhicule hybride selon cette architecture relativement complexe, prenant en compte les interactions entre les différentes composants . Il calcule le couple de chacun des deux moteurs électriques à partir du couple à la roue demandé par le conducteur et des consignes de régime et de couple du moteur thermique. Les deux consignes sont déterminées à partir de la vitesse des roues mesurée, du couple demandé à la roue et l'état de charge de la batterie, dans le but d'optimiser le rendement global de la chaîne de traction du véhicule, et de minimiser la consommation de carburants et l'émission de polluants.

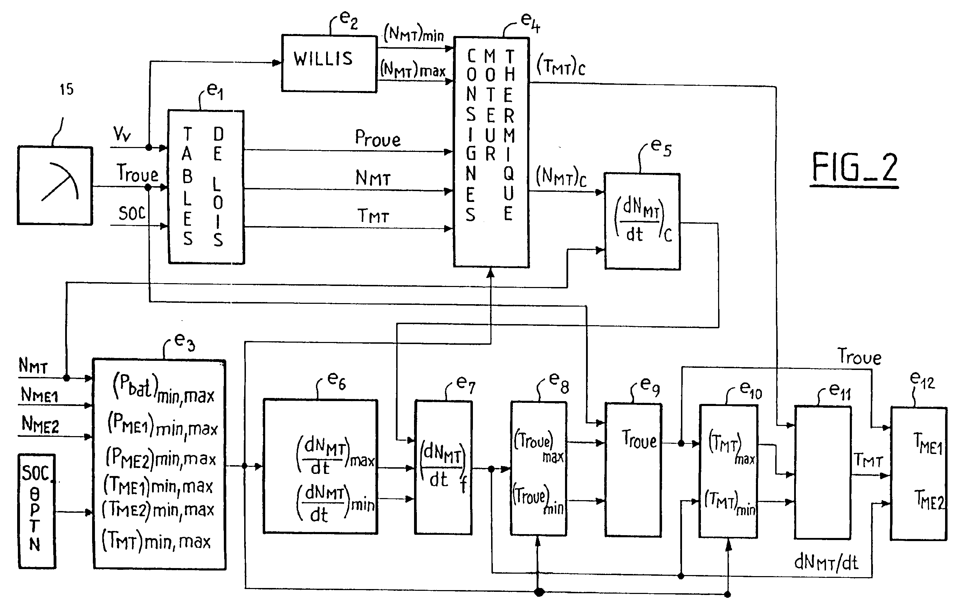

Un exemple de procédé de commande selon l'invention est représenté sur la figure 2, dans lequel est privilégiée la consigne de régime du moteur thermique sur celle du couple demandé à la roue.

La première étape $e_1$ du procédé consiste à établir les tables de lois de gestion de l'énergie, qui vont définir la consigne du régime ainsi que celle du couple du moteur thermique afin de satisfaire le couple demandé à la roue par le conducteur, de minimiser la consommation de carburant et d'électricité et de décharger ou recharger la batterie en fonction de l'état de charge. La demande du conducteur concernant le couple à la roue est interprétée à partir de la position de la pédale d'accélérateur.

Ces tables de lois sont prédéterminées en fonction de l'état du véhicule, défini par la vitesse $V_v$ du véhicule, le couple à la roue $T_{roue}$ demandé par le conducteur, l'état de la batterie et les couples minimal et maximal de chaque moteur électrique $T_{ME1}$ et $T_{ME2}$. L'état de la batterie comprend l'état de charge SOC, la température, l'intensité du courant débité, la tension de sortie et les puissances minimales et maximales obtenues.

A partir de ces informations, le véhicule peut fonctionner selon différents modes :

- en mode tout électrique, si le moteur thermique est éteint, le véhicule étant mû uniquement grâce à l'énergie électrique;
- en mode hybride avec boost électrique quand la batterie fournit l'énergie électrique par l'intermédiaire d'un ou des deux moteurs électriques et donc qu'elle se décharge;

- en mode hybride avec recharge de la batterie grâce au moteur thermique en marche qui fournit de l'énergie au système ;
- en mode tout thermique quand la puissance de la batterie est nulle.

Le mode de fonctionnement étant ainsi déterminé par l'état du véhicule ou par sélection manuelle, les tables de lois de gestion de l'énergie définissent le régime $N_{MT}$ et le couple $T_{MT}$ du moteur thermique.

D'autre part, elles tiennent compte de la puissance demandée $P_{roue}$ à la roue pour en déduire la puissance de la batterie, par différence entre cette puissance à la roue et la puissance du moteur thermique, au rendement près. En mode hybride et fonctionnement normal, la consigne de la puissance de la batterie est négative pour de faibles puissances à la roue, ce qui permet au moteur thermique de fonctionner à un point de bon rendement. Lorsque la puissance demandée à la roue est élevée, la batterie ajoute sa puissance à celle du moteur thermique et donc se décharge. Lorsque cette puissance à la roue $P_{roue}$ est dans la zone des valeurs moyennes, la batterie ne débite ni ne reçoit de courant. Une telle table de gestion de l'énergie permet, en circuit urbain, de rester à l'état de charge constant relativement. Dans le cas où la charge de la batterie devient inférieure à sa valeur définie, la puissance de recharge sera augmentée pendant que la puissance de décharge sera diminuée. Ces variations seront inversées quand l'état de charge est trop élevé.

Ainsi, la consigne de la puissance de la batterie est fournie dans une table de gestion de l'énergie dont les entrées sont la puissance à la roue et l'état de charge.

La deuxième étape $e_2$ consiste à déterminer les bornes minimale $(N_{MT})_{min}$ et maximale $(N_{MT})$ max du régime $N_{MT}$ du moteur thermique. En raison de l'interdépendance des régimes des différents composants liés au double train épicycloïcal par la formule de Willis, les quatre vitesses respectivement des roues, des deux moteurs électriques et du moteur thermique sont liées par deux équations, donc seules deux vitesses sont indépendantes l'une de l'autre. Ainsi, pour une vitesse de roue donnée, le régime de consigne du moteur thermique est limité par les vitesses minimales et maximales des deux moteurs électriques $ME_1$ et $ME_2$.

Simultanément, une troisième étape $e_3$ calcule les limites admissibles des composants que sont le moteur thermique, les deux moteurs électriques et la batterie. Il existe deux types de changements de limitations des composants : d'une part, ceux qui sont liés à une défaillance du composant, en cas de surchauffe par exemple, de sorte que les limites de puissance, de couple, ou les vitesses minimale et maximale du composant peuvent être changées sur une échelle de temps généralement longue. D'autre part, les changements dus aux limitations de couple disponible en sortie de chacun des trois moteurs électriques et thermique en fonction de leur régime instantané, qui peuvent être beaucoup plus rapides. Les limites sont recalculées à chaque instant.

En cas de défaillance, les limites des composants admissibles peuvent être calculées soit directement au niveau du superviseur, soit au niveau du composant lui-même et dans ce cas, l'information doit remonter au superviseur. Cette étape de gestion des limites contribue notablement à la robustesse de la commande. Il ne modifie pas séquentiellement l'un ou l'autre des couples moteurs pour satisfaire les consignes demandées, mais simultanément, lorsque les limites des composants sont atteintes. Il est ainsi possible de corriger la commande en couple si le composant voisin est saturé, afin de satisfaire les différents critères.

Ainsi, cette troisième étape $e_3$ part du régime instantané $N_{MT}$ du moteur thermique, et des régimes instantanés $N_{ME1}$ et $N_{ME2}$ des moteurs électriques d'une part et des informations sur les composants soit l'état général de la batterie et pour chacun des moteurs la température $\theta$, notamment celle du moteur thermique pour optimiser son fonctionnement et réduire les émissions polluantes, les valeurs minimales et maximales $P_{min}$ et $P_{max}$ de la puissance, $T_{min}$ et $T_{max}$ du couple et $N_{min}$ et $N_{max}$ du régime d'autre part. Cette étape délivre les limites des composants soit les bornes minimales et maximales de la puissance de la batterie $P_{bat}$, de la puissance des moteurs électriques $P_{ME1}$ et $P_{ME2}$, du couple de ces deux moteurs $T_{ME1}$ et $T_{ME2}$ et du couple du moteur thermique $T_{MT}$.

La quatrième étape $e_4$ permet la détermination des consignes de couple $(T_{MT})_c$ et de régime $(N_{MT})_c$ du moteur thermique à partir du couple $T_{MT}$ et du régime $N_{MT}$ déterminés par la table de gestion de l'énergie, à l'étape $e_1$, qui fournit le point de meilleur fonctionnement à puissance fixée. Si la vitesse du moteur obtenue dépasse les bornes autorisées par les formules de WILLIS à l'étape $e_2$, les consignes de régime, et en conséquence de couple, du moteur thermique sont alors corrigées. La puissance du moteur thermique est directement issue de la différence entre la puissance de la batterie et celle des roues.

A partir de l'asservissement du régime $N_{MT}$ du moteur thermique à sa valeur de consigne $(N_{MT})_c$ définie à l'étape précédente, l'étape $e_5$ calcule la consigne d'accélération $(dN_{MT}/dt)_c$ du moteur thermique.

Cet asservissement est réalisé par un correcteur Proportionnel Intégral PI ou un contrôleur à modèle interne par exemple.

La détermination de la consigne finale de cette accélération sera faite après calcul de ses limites supérieure et inférieure, à l'étape suivante $e_6$, réalisé à partir des limites des composants calculées à l'étape $e_3$. Pour cela, l'accélération du moteur thermique $dN_{MT}/dt$ est définie par l'équation suivante $E_1$ :

$$(E_1) \quad dN_{MT}/dt = a*T_{MT} + b*T_{ME1} + c*T_{ME2}$$

qui traduit sa dépendance aux liaisons mécaniques entre les trois moteurs et entre les trains qui les relient, ainsi qu'à leur dimensionnement. Les coefficients a, b et c sont des paramètres qui dépendent du dimensionnement de la chaîne de traction, soit les raisons des trains épicycloïdaux, les rapports de réduction et les inerties des moteurs thermique et électriques.

Cette prise en compte simultanée des couples de tous les moteurs, thermique et électriques, pour satisfaire la consigne est nécessaire dans le cas du double différentiel, car le régime du moteur thermique dépend précisément de ces couples. Sans le nouveau dispositif de commande selon l'invention, on peut enregistrer des surrégimes sur le double différentiel en prenant en compte les limites des composants.

Après cette étape $e_6$ de calcul des bornes maximale $(dN_{MT}/dt)_{max}$ et minimale $(dN_{MT}/dt)_{min}$ de l'accélération du moteur thermique, l'étape suivante $e_7$ sélectionne la consigne finale d'accélération $(dN_{MT}/dt)_f$ qui est contenue dans les limites accessibles et est la plus proche de la consigne d'accélération initiale.

Comme précédemment, le procédé réalise une étape $e_8$ de saturation de la demande en couple à la roue en fonction des limites des organes, grâce à un algorithme de recherche des bornes minimale $(T_{roue})_{min}$ et maximale $(T_{roue})_{max}$ qui fonctionne quelles que soient les limites des composants, par résolutions successives de systèmes d'équations de manière analytique. Cet algorithme est donc facilement codable dans un calculateur embarqué et permet d'éviter des pertes de couple à la roue et des oscillations. Etant donné que les couples des moteurs ont une répercussion à la fois sur l'accélération du moteur thermique et le couple à la roue, ce dernier est calculé à partir d'une accélération désirée, définie à l'étape $e_7$.

Les bornes extrêmes du couple à la roue sont définies par l'équation suivante $E_2$ :

$$(E_2) \quad T_{roue} = \alpha*T_{MT} + \beta* T_{ME1} + \gamma*T_{ME2}$$

les coefficients $\alpha$, $\beta$ et $\gamma$ étant des paramètres de même nature que les coefficients a, b et c de l'équation $E_1$ précédente.

L'étape suivante $e_9$ détermine la consigne $(T_{roue})_f$ finale de ce couple à la roue en sélectionnant celui qui est le plus proche du couple demandé initialement.

Cette consigne peut être modifiée tout en restant admissible, c'est-à-dire en assurant une accélération ou une décélération minimale à assurer, afin de mieux répondre à la demande de couple à la roue.

Connaissant le couple à la roue $(T_{roue})_f$ par l'étape $e_9$ et l'accélération du moteur thermique $(dN_{MT}/dt)_f$ par l'étape $e_7$ demandés, le procédé détermine à l'étape $e_{10}$ la borne minimale $(T_{MT})_{min}$ et la borne maximale $(T_{MT})_{max}$ admissibles sur le couple du moteur thermique en fonction des limites des composants, définies à l'étape $e_3$.

L'étape $e_{11}$ suivante sélectionne le couple final du moteur thermique $(T_{MT})_f$ le plus proche du couple initialement calculé à l'étape $e_4$.

Le but du procédé de commande étant de calculer les consignes en couple des deux moteurs électriques $ME_1$ et $ME_2$ à partir du couple $(T_{MT})_f$ du moteur thermique, de son accélération $(dN_{MT}/dt)_f$ désirée et de la consigne de couple à la roue $(T_{roue})_f$, ces trois données étant déterminées à ce stade du procédé, la dernière étape $e_{12}$ doit résoudre un système de deux équations linéaires à deux inconnues qui sont les couples des deux moteurs électriques du véhicule. Les valeurs qui sont alors calculées vérifient toutes les contraintes sur les composants car les consignes sélectionnées pour leur calcul font partie du domaine accessible par le système de commande.

Dans cet exemple de déroulement du procédé de commande d'un véhicule hybride où la consigne du régime du moteur thermique a été privilégiée sur celle du couple à la roue, l'ordre de détermination des limites consiste à déterminer en premier les bornes de l'accélération du moteur thermique, qui est alors fixée, puis les bornes du couple à la roue. Cet ordre, correspondant à une hiérarchisation particulière des priorités de commande, peut être modifié, en particulier en privilégiant le couple à la roue sur l'accélération du moteur thermique ou en privilégiant le couple du moteur thermique sur son accélération et sur le couple à la roue. Il est également possible de trouver un compromis entre les deux objectifs, afin d'assurer un régime suffisant pour le moteur thermique, tout en évitant des trous de couple lors d'accélérations ou de décélérations fortes du régime de cet arbre.

Grâce au procédé de commande selon l'invention, le véhicule hybride peut rouler selon différentes phases.

Notamment, en mode de fonctionnement hybride avec recharge lors d'une phase de traction, le moteur thermique est en marche et fournit de l'énergie au système qui sert à entraîner les roues et/ou recharger le stock d'énergie électrique de la batterie. Cette dernière peut également fournir de l'énergie, par l'intermédiaire d'un ou des deux moteurs électriques, en mode hybride avec boost électrique.

Lorsque le moteur thermique ne fonctionne pas, en mode tout électrique, le véhicule se déplace grâce à l'énergie électrique seule et on asservit alors le régime du moteur thermique à une valeur nulle dans les différentes étapes du procédé précédemment décrit.

Le véhicule passe en phase de freinage régénératif sur un lâcher de pédale d'accélérateur, c'est-à-dire qu'une partie de l'énergie disponible aux roues est réinjectée sous forme électrique dans la batterie. Si le moteur thermique est en marche, il est alors amené à son régime minimal, qui dépend entre autres de la vitesse du véhicule par les diagrammes de RAVIGNEAUX, qui sont fonction des régimes limites des moteurs électriques. Ce régime minimal peut être très supérieur à zéro.

A propos de la logique de démarrage, comme d'arrêt du moteur thermique, à condition de changer les seuils, le démarrage est décidé notamment :

- sur détection du couple demandé à la roue et de la vitesse du véhicule et d'un état de la batterie insatisfaisant, c'est-à-dire en état de charge faible avec une température élevée, une tension faible, une intensité électrique forte ou une puissance insuffisante. Dans ce cas, il ne faut plus décharger la batterie et le moteur thermique ainsi en marche pourra éventuellement recharger la batterie,
- sur détection d'un seuil de vitesse véhicule au-delà duquel la dépendance entre régimes des différents moteurs, liés par le double train épicycloïdal, oblige à démarrer le moteur thermique qui est limité par une vitesse minimale de façon à ce que les moteurs électriques ne soient pas en surrégimes. De plus, ce seuil de vitesse peut varier avec d'autres critères, comme l'état de la batterie ou le couple demandé à la roue.

Dans le procédé de commande qui vient d'être décrit, les critères ont été hiérarchisés dans l'ordre suivant :

- accélération du moteur thermique,
- couple à la roue,
- couple du moteur thermique.

Cet ordre peut être modifié et privilégier la réalisation du couple du moteur thermique issu des tables de lois de gestion de l'énergie, puis l'asservissement du moteur thermique et le couple à la roue.

Il est également possible de regrouper plusieurs critères en un seul.

Les critères ou leurs variations peuvent être saturés de manière à éviter de trop fortes variations du couple du moteur thermique, ou pour obtenir une variation de couple à la roue de même signe que celle demandée par le conducteur, ou encore pour assurer une accélération minimale du régime du moteur thermique.

L'intérêt de ce procédé de commande selon l'invention est qu'il permet de répondre aux différents critères quel que soit leur ordre de hiérarchisation ou leurs valeurs limites à respecter impérativement.

Il suffit pour cela d'inverser l'ordre des étapes, par exemple réaliser l'étape $e_9$ de calcul des limites du couple à la roue $T_{roue}$ avec l'étape $e_6$ de calcul des limites de l'accélération $dN_{MT}/dt$, ou bien d'imposer une valeur limite de critère, par exemple $(dN_{MT}/dt)_{min}$ pour la détermination du couple à la roue $T_{roue}$.

## Revendications

1. Procédé de commande d'un véhicule hybride à transmission électrique de type série/parallèle, comprenant d'une part un moteur -thermique et deux moteurs électriques alimentés par une batterie et qui entraînent les roues d'un véhicule par un double train épicycloïdal, et d'autre part, un calculateur électronique de commande qui est relié à chacun des trois moteurs par leurs circuits de commande respectifs et à la batterie par son circuit gestionnaire et qui les commande en fonction de l'enfoncement de la pédale d'accélérateur par le conducteur, **caractérisé en ce qu'**il calcule les consignes de couples ($T_{ME1}$) du premier moteur électrique ($ME_1$) et ($T_{ME2}$) du deuxième moteur électrique ($ME_2$) en fonction des consignes finales de trois grandeurs, l'accélération $(dN_{MT}/dt)_f$ et le couple $(T_{MT})_f$ du moteur thermique (1) et le couple à la roue $(T_{roue})_f$, définies entre des bornes minimale et maximale calculées pour respecter les limites des moteurs et de la batterie en puissance, en couple, en vitesse minimale et maximale.

2. Procédé de commande d'un véhicule hybride selon la revendication 1, **caractérisé en ce qu'**il comporte une première phase de détermination des consignes du régime $(N_{MT})_c$ et du couple $(T_{MT})_c$ à partir de tables de gestion de l'énergie recevant en entrée la vitesse $(V_v)$ du véhicule, le couple $(T_{roue})$ à la roue et l'état de charge (SOC) de la batterie (4) et fournissant le meilleur point de fonctionnement à puissance fixée, entre deux bornes minimale et maximale définies par les vitesses minimales et maximales des deux moteurs électriques ($ME_1$ et $ME_2$).

3. Procédé de commande d'un véhicule hybride selon la revendication 1, **caractérisé en ce qu'**il comporte une deuxième phase de saturation de chacune des trois grandeurs de consigne, l'accélération ($dN_{MT}/dt$) et le couple ($T_{MT}$) du moteur thermique et le couple à la roue ($T_{roue}$), en fonction desquelles est effectué le calcul des consignes de couples ($T_{ME1}$) et ($T_{ME2}$) des deux moteurs électriques, par un algorithme de recherche des bornes minimale et maximale en fonction des limites des composants, moteurs et batterie, suivie d'une troisième phase de détermination de la valeur de consigne finale de chacune de ces trois grandeurs contenue entre lesdites bornes et la plus proche de la consigne initiale.

4. Procédé de commande d'un véhicule hybride selon la revendication 2, **caractérisé en ce que** la première phase de détermination des consignes du régime ($N_{MT}$)$_c$ et du couple ($T_{MT}$)$_c$ comporte une étape ($e_1$) d'établissement des tables de gestion de l'énergie à partir de la vitesse du véhicule ($V_v$), du couple à la roue ($T_{roue}$) demandé par le conducteur selon l'enfoncement de la pédale d'accélérateur, et de l'état de charge (SOC) de la batterie, qui délivrent le couple ($T_{MT}$) et le régime ($N_{MT}$) du moteur thermique, afin d'optimiser un critère de rendement global du véhicule.

5. Procédé de commande d'un véhicule hybride selon la revendication 2, **caractérisé en ce que** les bornes minimale ($N_{MT}$)$_{min}$ et maximale ($N_{MT}$)$_{max}$ du régime du moteur thermique sont déterminés en fonction des vitesses minimales et maximales des deux moteurs électriques ($ME_1$ et $ME_2$) pour une vitesse de roue donnée, par la formule de WILLIS, traduisant l'interdépendance des régimes du moteur thermique, des deux moteurs électriques et des roues, liés au double train épicycloïdal.

6. Procédé de commande d'un véhicule hybride selon la revendication 3, **caractérisé en ce que** l'étape ($e_3$) de calcul des limites admissibles des composants prend comme information d'entrée d'une part le régime ($N_{MT}$) du moteur thermique, et les régimes ($N_{ME1}$ et $N_{ME2}$) des deux moteurs électriques et d'autre part des informations sur les composants soit l'état de charge (SOC) de la batterie, la température d'eau (T) du moteur thermique, des valeurs minimales et maximales ($P_{min}$) et ($P_{max}$) de la puissance à la roue, ($T_{min}$) et ($T_{max}$) du couple à la roue et ($N_{min}$) et ($N_{max}$) du régime du moteur thermique, et délivre les bornes minimales et maximales de la puissance de la batterie ($P_{bat}$), de la puissance ($P_{ME1}$) et ($P_{ME2}$) et du couple ($T_{ME1}$) et ($T_{ME2}$) des moteurs électriques et du couple du moteur thermique ($T_{MT}$).

**Claims**

1. A control method for a hybrid vehicle with electric transmission of series/parallel type, comprising, on the one hand, a thermal engine and two electric motors supplied by a battery which drive the wheels of a vehicle via a double planetary gear train and, on the other hand, an electronic control computer which is connected to the thermal engine and the electric motors via their respective control circuits and to the battery via its management circuit and which controls them as a function of the depression of the accelerator pedal by the driver, **characterised in that** it calculates the torque references ($T_{ME1}$) of the first electric motor ($ME_1$) and ($T_{ME2}$) of the second electric motor ($ME_2$) as a function of the final references of three magnitudes, the acceleration ($dN_{MT}/dt$)$_f$, the torque ($T_{MT}$)$_f$ of the thermal engine (1) and the wheel torque ($T_{wheel}$)$_f$, defined between minimum and maximum limits calculated to respect the limits of the engine and motors and the battery in terms of power, torque and minimum and maximum speed.

2. A control method for a hybrid vehicle as claimed in claim 1, **characterised in that** it comprises a first stage of calculation of the speed ($N_{MT}$)$_c$ and torque ($T_{MT}$)$_c$ references from energy management tables receiving as input the speed ($V_V$) of the vehicle, the wheel torque ($T_{wheel}$) and the charge state (SOC) of the battery (4) and supplying the best operating point at fixed power, between two minimum and maximum limits defined by the minimum and maximum speeds of the two electric motors ($ME_1$, $ME_2$).

3. A control method for a hybrid vehicle as claimed in claim 1, **characterised in that** it comprises a second stage of saturation of each of the three reference magnitudes, the acceleration ($dN_{MT}/dt$), the torque ($T_{MT}$) of the thermal engine (1) and the wheel torque ($T_{wheel}$), as a function of which torque references ($T_{ME1}$) and ($T_{ME2}$) are calculated for the two electric motors by means of an algorithm searching minimum and maximum limits as a function of the limits of the components, engine, motors and battery, followed by a third stage of calculation of the final reference valve of each of these three magnitudes contained between the limits and closest to the initial reference.

4. A control method for a hybrid vehicle as claimed in claim 2, **characterised in that** the first stage of calculation of the speed ($N_{MT}$)$_c$ and torque ($T_{MT}$)$_c$ references comprises a stage ($e_1$) of establishment of the energy management tables from the speed of the vehicle ($V_V$) and the wheel torque ($T_{wheel}$) demanded by the driver by depressing the accelerator pedal and the charge state (SOC) of the battery, which supply the torque ($T_{MT}$) and the speed ($N_{MT}$) of the thermal engine, in order to optimise a criterion of overall performance of the vehicle.

5. A control method for a hybrid vehicle as claimed in claim 2, **characterised in that** the minimum $(N_{MT})_{min}$ and maximum $(T_{MT})_{max}$ limits of the speed of the thermal engine are calculated as a function of the minimum and maximum speeds of the two electric motors $(ME_1, ME_2)$ for a given wheel speed, by the Willis formula, translating the interdependence of the speeds of the thermal engine, the two electric motors and the wheels, connected to the double planetary gear train.

6. A control method for a hybrid vehicle as claimed in claim 3, **characterised in that** the stage $(e_3)$ of calculation of the admissible limits of the components takes as input information the speed $(N_{MT})$ of the thermal engine, and the speeds $(N_{ME1}, N_{ME2})$ of the two electric motors, and information on the components, i.e. the charge state (SOC) of the battery, the water temperature (T) of the thermal engine, minimum and maximum values $(P_{min})$ and $(P_{max})$ of the wheel power, $(T_{min})$ and $(T_{max})$ of the wheel torque and $(N_{min})$ and $(N_{max})$ of the speed of the thermal engine, and supplies the minimum and maximum limits of the battery power $(P_{bat})$, the power $(P_{ME1})$ and $(P_{ME2})$ and the torque $(T_{ME1})$ and $(T_{ME2})$ of the electric motors and the torque of the thermal engine $(T_{MT})$.

**Patentansprüche**

1. Verfahren zur Steuerung eines Hybridfahrzeugs mit elektrischem Getriebe vom Typ seriell/parallel, das einerseits eine Wärmekraftmaschine und zwei durch eine Batterie gespeiste Elektromotoren, welche die Räder eines Fahrzeugs über ein doppeltes Planetengetriebe antreiben, umfasst, und andererseits einen elektronischen Steuerrechner, der mit jedem der drei Motoren über deren jeweilige Steuerschaltungen und mit der Batterie über deren Steuerschaltung verbunden ist, und der sie in Abhängigkeit der Versenkung des Gaspedals durch den Fahrer steuert, **dadurch gekennzeichnet, dass** er die Sollwerte des Drehmoments $(T_{EM1})$ des ersten Elektromotors $(EM_1)$ und $(T_{EM2})$ des zweiten Elektromotors $(EM_2)$ in Abhängigkeit der endgültigen Sollwerte dreier Größen, der Beschleunigung $(dN_{WKM}/dt)_f$ und des Drehmoments $(T_{WKM})_f$ der Wärmekraftmaschine (1) sowie des Drehmoments am Rad $(T_{rad})_f$, berechnet, die zwischen minimalen und maximalen Grenzwerten definiert sind, welche so berechnet sind, dass sie die Grenzen der Motoren und der Batterie bezüglich Leistung, Drehmoment, sowie Minimal- und Maximalgeschwindigkeit respektieren.

2. Verfahren zur Steuerung eines Hybridfahrzeugs nach Anspruch 1, **dadurch gekennzeichnet, dass** es eine erste Phase der Bestimmung der Sollwerte der Drehzahl $(N_{WKM})_s$ und des Drehmoments $(T_{WKM})_s$ anhand von Tabellen zur Energieverwaltung umfasst, die als Eingang die Geschwindigkeit $(V_f)$ des Fahrzeugs, das Drehmoment $(T_{rad})$ am Rad und den Ladezustand (SOC) der Batterie (4) erhalten und den besten Betriebspunkt bei gegebener Leistung zwischen zwei Grenzwerten, minimal und maximal, liefern, die durch die Minimal- und Maximalgeschwindigkeiten der zwei Elektromotoren $(EM_1$ und $EM_2)$ definiert sind.

3. Verfahren zur Steuerung eines Hybridfahrzeugs nach Anspruch 1, **dadurch gekennzeichnet, dass** es eine zweite Phase der Sättigung jeder der drei Sollwertgrößen, der Beschleunigung $(dN_{WKM}/dt)$ und des Drehmoments $(T_{WKM})$ der Wärmekraftmaschine sowie des Drehmoments am Rad $(T_{rad})$, umfasst, wobei in deren Abhängigkeit die Berechnung der Sollwerte der Drehmomente $(T_{EM1})$ und $(T_{EM2})$ der zwei Elektromotoren durch einen Algorithmus zur Suche der minimalen und maximalen Grenzwerte in Abhängigkeit der Grenzen der Komponenten, Motoren und Batterie, erfolgt, gefolgt von einer dritten Phase der Bestimmung des endgültigen Sollwerts einer jeden dieser drei Größen, der zwischen den Grenzwerten und so nahe wie möglich am Ursprungssollwert liegt.

4. Verfahren zur Steuerung eines Hybridfahrzeugs nach Anspruch 2, **dadurch gekennzeichnet, dass** die erste Phase der Bestimmung der Sollwerte der Drehzahl $(N_{WKM})_s$ und des Drehmoments $(T_{WKM})_s$ einen Schritt $(s_1)$ der Erstellung der Tabellen zur Energieverwaltung anhand der Fahrzeuggeschwindigkeit $(V_f)$, des durch den Fahrer gemäß der Versenkung des Gaspedals geforderten Drehmoments am Rad $(T_{rad})$ und des Ladezustands (SOC) der Batterie umfasst, welche das Drehmoment $(T_{WKM})$ und die Drehzahl $(N_{WKM})$ der Wärmekraftmaschine liefern, um ein Kriterium des Gesamtwirkungsgrads des Fahrzeugs zu optimieren.

5. Verfahren zur Steuerung eines Hybridfahrzeugs nach Anspruch 2, **dadurch gekennzeichnet, dass** die minimalen $(N_{WKM})_{min}$ und maximalen $(N_{WKM})_{max}$ Grenzwerte der Drehzahl der Wärmekraftmaschine in Abhängigkeit der minimalen und maximalen Geschwindigkeiten der beiden Elektromotoren $(EM_1$ und $EM_2)$ bei einer gegebenen Radgeschwindigkeit durch die WILLIS-Formel bestimmt werden, welche die Wechselbeziehung der Drehzahlen der Wärmekraftmaschine, der zwei Elektromotoren und der Räder, die mit dem doppelten Planetengetriebe verbunden sind, wiedergibt.

6. Verfahren zur Steuerung eines Hybridfahrzeugs nach Anspruch 3, **dadurch gekennzeichnet, dass** der Schritt ($S_3$) der Berechnung der zulässigen Grenzen der Komponenten als Eingangsinformation einerseits die Drehzahl ($N_{WKM}$) der Wärmekraftmaschine sowie die Drehzahlen ($N_{EM1}$ und $N_{EM2}$) der zwei Elektromotoren und andererseits Informationen bezüglich der Komponenten, nämlich den Ladezustand (SOC) der Batterie, die Wassertemperatur (T) der Wärmekraftmaschine, Minimal- und Maximalwerte ($P_{min}$) und ($P_{max}$) der Leistung am Rad, ($T_{min}$) und ($T_{max}$) des Drehmoments am Rad sowie ($N_{min}$) und ($N_{max}$) der Drehzahl der Wärmekraftmaschine aufnimmt, und die minimalen und maximalen Grenzwerte der Batterieleistung ($P_{bat}$), der Leistung ($P_{EM1}$) und ($P_{EM2}$) und des Drehmoments ($T_{EM1}$) und ($T_{EM2}$) der Elektromotoren sowie des Drehmoments der Wärmekraftmaschine ($T_{WKM}$) liefert.

## FIG_1

EP 1 224 092 B1

FIG_2